Europäisches Patentamt

**European Patent Office**

Office européen des brevets

(11) Veröffentlichungsnummer: **0 224 704**
**B1**

(12) **EUROPÄISCHE PATENTSCHRIFT**

(45) Veröffentlichungstag der Patentschrift:
09.05.90

(21) Anmeldenummer: 86114605.8

(22) Anmeldetag: 22.10.86

(51) Int. Cl.⁵: **C03C 17/36**

(54) Verfahren zum Herstellung einer vorgespannten und/oder gebogenen Glasscheibe mit reduzierter Transmission.

(30) Priorität: 05.11.85 DE 3539130
28.11.85 DE 3542036
18.12.85 DE 3544840

(43) Veröffentlichungstag der Anmeldung:
10.06.87 Patentblatt 87/24

(45) Bekanntmachung des Hinweises auf die Patenterteilung:
09.05.90 Patentblatt 90/19

(84) Benannte Vertragsstaaten:
AT BE CH DE ES FR GB GR IT LI LU NL SE

(56) Entgegenhaltungen:
CH-A- 400 714
DE-A- 2 836 943
DE-C- 917 347

(73) Patentinhaber: FLACHGLAS AKTIENGESELLSCHAFT,
Otto-Seeling-Promenade 10-14, D-8510 Fürth(DE)

(72) Erfinder: Schmitte, Franz-Josef, Dr., Rudolfstrasse 1,
D-4650 Gelsenkirchen(DE)
Erfinder: Müller, Dieter, Auf der Reihe 3,
D-4650 Gelsenkirchen(DE)
Erfinder: Groth, Rolf, Dr., Holzstrasse 218,
D-4630 Bochum 6(DE)

(74) Vertreter: Goddar, Heinz J., Dr. et al, FORRESTER &
BOEHMERT Widenmayerstrasse 4/I,
D-8000 München 22(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zum Herstellen einer vorgespannten und/oder gebogenen Glasscheibe aus Natron-Kalk-Silikatglas mit reduzierter Transmission in (einem) vorgebbaren Spektralbereich(en), insbesondere Sonnenschutzscheibe, bei dem auf wenigstens eine Seite eines Glasträgers mindestens eine Metallschicht mit einem überwiegenden Gehalt an einem Metall oder einer Metallegierung aus den Elementen mit den Ordnungszahlen 22 bis 28 des Periodischen Systems und auf deren dem Glasträger abgewandte Seite eine Schutzschicht aus wenigstens einem Metalloxid oder Metallmischoxid aufgebracht werden und ein thermischer Vorspann- und/oder Biegeprozeß in Luft bei einer Temperatur von 580°C bis 680°C, vorzugsweise 600°C bis 650°C, durchgeführt wird.

Glasscheiben, welche oberflächlich eine Beschichtung aus einem Metall oder einer Metallegierung und im Anschluß daran eine Schutzschicht aus einem Metalloxid bzw. Metallmischoxid aufweisen, werden auf dem Bausektor und in der Fahrzeugverglasung verwendet, um die Transmission des unbeschichteten Glasträgers in bestimmten Spektralbereichen zu reduzieren. Dies erfolgt z. B., um einen Lichtdämpfungseffekt und/oder eine Sonnenschutzwirkung zu erhalten, wobei für die Metallschicht bevorzugt Metalle oder Metallegierungen aus den Elementen mit den Ordnungszahlen 22 - 28 des Periodischen Systems verwendet werden, wenn farbneutrale Glasscheiben gewünscht werden. In vielen solchen Anwendungsfällen ist es notwendig, den Glasträger thermisch vorzuspannen. Das geschieht z. B. zur Erhöhung der mechanischen Stabilität, zur Vermeidung von Hitzesprüngen und zur Reduzierung des Verletzungsrisikos bei Scheibenbruch.

Für die Erzeugung der thermischen Vorspannung werden die in der genannten Anwendung fast ausschließlich verwendeten Scheiben aus Natron-Kalk-Silikatglas in Luft rasch auf eine Temperatur oberhalb der Transformationstemperatur des Glases aufgeheizt und anschließend abgeschreckt. Die für den Vorspannprozeß benötigten Temperaturen liegen dabei im Bereich von 580°C bis 680°C, vorzugsweise im Bereich von 600°C bis 650°C. Der gleiche Temperaturbereich wird auch benötigt, wenn die von der Glasherstellung her planen Glasscheiben einem Biegeprozeß unterzogen werden, um in bestimmten Anwendungsfällen, z. B. auf dem Automobilsektor, gebogene Glasscheiben zu erhalten.

Bei dem gattungsgemäßen Verfahren erfolgt bisher das Aufbringen der Metallschicht ebenso wie natürlich das Aufbringen der Metalloxidschicht nach abgeschlossenem Vorspann- bzw. Biegeprozeß und Abkühlen der Scheiben, wobei hierzu in aller Regel Vakuum-Beschichtungsverfahren zur Anwendung kommen.

Diese Verfahrensweise, die Beschichtung im Anschluß an den Vorspann- bzw. Biegeprozeß durchzuführen, hat verschiedene Nachteile gegenüber einer Arbeitsweise, bei der zunächst die Beschichtung aufgebracht und anschließend der Vorspann- bzw. Biegeprozeß durchgeführt würde. So können im ersteren Falle nur Festmaße beschichtet werden, da vorgespannte Scheiben bekanntlich nicht zerschnitten werden können. Für die Beschichtungstechnik ist es dagegen viel günstiger, Einheitsmaße, insbesondere die Bandmaße der Glaserzeugung des Floatprozesses, zu beschichten. Im letzteren Falle lassen sich bei Vakuum-Beschichtungen die Probleme einer gleichmäßigen Schichtdicke viel leichter und einfacher lösen, als wenn Festmaße mit entsprechenden Lücken zwischen den einzelnen Scheiben im Beschichtungsfeld beschichtet werden. Hinzu kommt, daß der Transport solcher Einheitsmaße durch die Beschichtungsanlagen weniger aufwendig ist, als wenn Einzelstücke verschiedener Abmessungen transportiert werden müssen.

Ein weiterer Nachteil besteht darin, daß durch die hohen Temperaturen des Vorspann- bzw. Biegeprozesses Verunreinigungen auf der Glasoberfläche häufig mit ihr eine so feste Bindung eingehen, daß sie bei der anschließenden Oberflächenreinigung vor Durchführung des Beschichtungsprozesses nicht mehr so weit entfernt werden können, wie das für den anschließenden Beschichtungsprozeß notwendig ist. Sie sind quasi in die Glasoberfläche eingebrannt. Das führt zu einer störenden Verschlechterung der Beschichtungsqualität.

Im Falle der Beschichtung von gebogenen Scheiben sind naturgemäß die Probleme, eine ausreichende Schichtgleichmäßigkeit zu bekommen, besonders groß, weil sich Winkel und Abstand zu den Beschichtungsquellen durch die Krümmung der Scheiben zusätzlich verändern. Hinzu kommt, daß der Aufwand für Vakuum-Beschichtungsanlagen für die Beschichtung gebogener Scheiben wesentlich größer als der für die Beschichtung planer Scheiben ist, da Eingangs- und Ausgangsschleusen sowie Schleusen zwischen verschiedenen Beschichtungsstationen wesentlich breiter als beim Beschichten von planem Glas ausgebildet werden müssen.

Aus den genannten Gründen hat eine Verfahrensweise, bei welcher planes Glas, inbesondere in Form von Einheitsabmessungen, beschichtet und anschließend - insbesondere nach Herstellung der Festmaße durch Auftrennen - vorgespannt bzw. gebogen wird, beträchtliche Vorteile. Diese Vorgehensweise ist jedoch bei dem gattungsgemäßen Verfahren, also bei den Metallschichten, welche für die genannten Anwendungen eingesetzt werden, nicht durchführbar, weil durch die erforderlichen Temperaturen oberhalb von 480°C störende Schichtveränderungen - insbesondere durch die Oxidation der Schichten - hervorgerufen werden.

Dies ergibt sich z. B. aus der DE-OS 17 71 223. Sie beschreibt ein Verfahren zur Herstellung von Oxidschichten, nach welchem durch Vakuum-Aufdampfung hergestellte Metallschichten bzw. suboxidische Schichten dieser Metalle, insbesondere Schichten aus der Gruppe der Metalle Kobalt, Eisen, Mangan, Cadmium, Wismut, Kupfer, Gold, Blei und Nickel einem Wärmebehandlungsschritt bei Temperaturen zwischen 315°C und 677,5°C unterzogen und dadurch in die entsprechenden Oxide umgewandelt werden. Durch die Umwandlung in die Oxide erhöht sich jedoch die Transmission der Schichten, insbesondere im nahen Infraroten. Damit verschlechtert sich in unerwünschter Weise die Sonnenschutzwirkung gegenüber der von Metallschichten.

Neben Metallschichten wurden auch Kombinationen dieser Schichten mit transparenten Oxidschichten vorgeschlagen. So kann auf der dem Glasträger abgewandten Seite der Metallschicht eine transparente Oxidschicht als Schutzschicht zur Verbesserung der mechanischen Eigenschaften oder bei Ausbildung als Viertelwellenlängenschicht für das sichtbare Gebiet als Entspiegelungsschicht zur Erhöhung der selektiven Transmission angeordnet sein. In einer weiteren Ausbildung solcher Schichtsysteme ist es vorgesehen, die Metallschicht beidseitig in hochbrechende Entspiegelungsschichten aus Metalloxiden einzubetten (siehe z. B. JP-OS 54-058719). Darüber hinaus wurde auch bereits vorgeschlagen, zur Erhöhung der Langzeitbeständigkeit solcher Schichtsysteme zwischen der Metallschicht und der Entspiegelungsschicht, welche auf der dem Glasträger abgewandten Seite der Metallschicht angeordnet ist, eine weitere dünne Metallschicht anzuordnen (EP-OS 00 35 906).

Durchgeführte Untersuchungen haben ergeben, daß bei Schichtanordnungen wie den vorstehend beschriebenen, bei denen eine Metallschicht durch eine Oxidschicht auf der dem Glasträger abgewandten Seite geschützt ist, keine ausreichende Stabilität erreicht werden kann, wenn diese Schichtanordnungen der Temperaturbelastung ausgesetzt werden, wie sie beim Vorspann- bzw. Biegeprozeß auftritt.

Eine derartige Schichtanordnung, wie sie auch beim gattungsgemäßen Verfahren erhalten wird, ist beispielsweise aus der US-PS 3 846 152 grundsätzlich bekannt.

Die EP-OS 01 08 616 lehrt, zur Herstellung von gebogenen Kfz-Scheiben mit elektrisch leitfähiger Metalloxidbeschichtung den Biegeprozeß zur Vermeidung von Rißbildung bei einem vorgegebenen unterstöchiometrischen Zustand der Metalloxidschicht durchzuführen. Die DE-PS 917 347 behandelt ein Verfahren zur Herstellung von elektrisch leitfähigen Schichten, bei dem eine unterstöchiometrische Zinnoxid- oder Indiumoxidschicht auf einen Glasträger aufgebracht und anschließend durch Erhitzen in Luft eine Umwandlung in das vollständige Oxid durchgeführt wird. Die US-PS 3 962 488 sowie die US-PS 4 017 661 betreffen ebenfalls die Herstellung von elektrisch leitfähigen Beschichtungen mit hoher Lichtdurchlässigkeit, bei denen jedoch eine Silber- bzw. Goldschicht beidseitig in Titanoxidschichten eingebettet ist und die Titanoxidschichten zur Vermeidung von Agglomeratbildung der Edelmetallschicht mit einem Sauerstoffdefizit aufgebracht werden. Schließlich zeigt die DE-OS 30 27 256 die Verwendung von unterstöchiometrischen Titanoxidschichten als ein Bestandteil von Abdeckschichten für transmissionsändernde Metallschichten mit dem Zweck, auf diese Weise neben weiteren Maßnahmen die Korrosionsbeständigkeit etc. der Metallschichten zu verbessern. Jedoch lassen sich die in den letztgenannten Druckschriften aufgeführten Materialkombinationen, insbesondere bei einer Vorgehensweise gemäß DE-OS 30 27 256, nicht bei einem Verfahren der gattungsgemäßen Art in einer derartigen Weise einsetzen, daß in Abwandlung der bisher bekannten Prozeßführung das Beschichten des Glasträgers vor dem Vorspannprozeß erfolgte: Eine derartige Verfahrensweise führt nämlich dabei unweigerlich zu einer störenden Veränderung der Metallschicht, sei es durch Oxidation, sei es durch Agglomeration, so daß auch diese Druckschriften keine Anregung dazu geben können, die Nachteile des gattungsgemäßen Verfahrens zu vermeiden.

Der Erfindung liegt daher die Aufgabe zugrunde, das gattungsgemäße Verfahren dahingehend weiterzubilden, daß die mit der Beschichtung des Glasträgers erst nach dem Vorspann- bzw. Biegeprozeß verbundenen verfahrensmäßigen Nachteile vermieden und ohne die Gefahr von Schichtveränderungen der Metallschicht die erforderlichen Beschichtungsmaßnahmen bereits vor dem Vorspann- und/oder Biegeprozeß durchgeführt werden können.

Erfindungsgemäß wird diese Aufgabe dadurch gelöst, daß sowohl die Metallschicht als auch die Schutzschicht vor dem thermischen Vorspann- und/oder Biegeprozeß auf den im wesentlichen planen Glasträger aufgebracht werden; und daß die Schutzschicht mit einem Sauerstoffdefizit x, bezogen auf ein Metallatom des Metalloxids bzw. der Metalloxide, von $0,05 \leq x \leq 0,4$ und in einer Dicke von 10 nm bis 100 nm in einer derartigen Zusammensetzung aufgebracht wird, daß beim Vorspann- und/oder Biegeprozeß keine nennenswerte Sauerstoffdiffusion bis zu der Metallschicht stattfindet.

Eine bevorzugte Ausführungsform der Erfindung zeichnet sich dadurch aus, daß als Schutzschicht eine Schicht aus oder mit einem überwiegenden Gehalt an wenigstens einem Metalloxid oder Metallmischoxid aus der Gruppe Sn, In, Ta aufgebracht wird.

Dabei kann vorgesehen sein, daß das Sauerstoffdefizit im Bereich $0,1 \leq x \leq 0,3$ liegt.

Die Erfindung sieht weiterhin auch vor, daß als Schutzschicht eine Indiumoxidschicht mit der Zusammensetzung $InO_{1.5-x}$ aufgebracht wird.

Alternativ hierzu sieht die Erfindung ggf. vor, daß als Schutzschicht eine Zinnoxidschicht mit der Zusammensetzung $SnO_{2-x}$ aufgebracht wird.

Auch kann erfindungsgemäß vorgesehen sein, daß als Schutzschicht eine Tantaloxidschicht mit der Zusammensetzung $TaO_{2.5-x}$ aufgebracht wird.

Eine weitere Ausführungsform der Erfindung schlägt vor, daß die Dicke der Schutzschicht mindestens 13 nm beträgt.

Dabei kann so vorgegangen werden, daß die Dicke der Schutzschicht ca. 20 nm bis 70 nm beträgt.

In weiterer Ausbildung kann dabei vorgesehen sein, daß auf die Schutzschicht eine Deckschicht aus mindestens einem Metalloxid im wesentlichen stöchiometrischer Zusammensetzung aufgebracht wird.

Die Erfindung ist in einer besonderen Ausführungsform ferner dadurch gekennzeichnet, daß die Deckschicht mindestens ein Metalloxid aus derjenigen Gruppe aufweist, aus der das Metalloxid bzw. die Metalloxide für die Schutzschicht ausgewählt ist bzw. sind.

Dabei kann so vorgegangen werden, daß die metallische Zusammensetzung der Deckschicht derjenigen der Schutzschicht entspricht.

Schließlich sieht die Erfindung ggf. auch vor, daß auf den Glasträger vor dem Aufbringen der Metallschicht(en) mindestens eine Unterschicht aus einem Metall, einer Metallegierung, einem Metalloxid oder einem Metallmischoxid aufgebracht wird.

Die Erfindung, bei der natürlich, wenn beispielsweise vorgespannte Brüstungsplatten oder dergleichen hergestellt werden sollen, die Lichtdurchlässigkeit der Glasscheibe auf Null reduziert werden kann, beruht auf der überraschenden Erkenntnis, daß eine für das Vorspannen bzw. Biegen benötigte Schutzwirkung einer auf der dem Glasträger abgewandten Seite der Metallschicht aufgebrachten Oxidschicht dann erreicht wird, wenn die Oxidschicht in ihrer Zusammensetzung von der stöchiometrischen Zusammensetzung des betreffenden Oxids abweicht. Benötigt wird ein Sauerstoffdefizit, welches einen Maximal- und Minimalwert nicht über- bzw. unterschreiten darf. Auch ist es notwendig, daß bei einer Metallschicht, die einen überwiegenden Gehalt an einem Metall oder einer Metallegierung aus den Elementen mit den Ordnungszahlen 22 - 28 des Periodischen Systems aufweist, die Schutzschicht aus geeignetem, erfindungsgemäß vorgeschlagenem Material besteht; eine Materialkombination, wie sie z. B. aus der DE-OS 30 27 256 bekannt ist, wäre völlig unbrauchbar, da beim Erhitzen der dort beschriebenen Scheiben auf Biege- bzw. Vorspanntemperatur die Metallschicht unvermeidlich zerstört wird.

Dieses Ergebnis ist unerwartet. Man würde nämlich annehmen, daß die Einwirkung von Sauerstoff auf die Metallschicht beim Erhitzen dann am geringsten ist, wenn für die Schutzschicht die stöchiometrische Zusammensetzung vorliegt. Die Diffusion durch eine Schicht erfolgt nämlich bekanntlich über Fehlstellen in der Schicht. Deren Zahl ist jedoch am geringsten, wenn die stöchiometrische Zusammensetzung des Oxids vorliegt. Die Gründe für die beobachtete Schutzwirkung im Bereich eines bestimmten Sauerstoff-Defizits sind nicht bekannt.

Überraschend ist ferner, daß das Sauerstoffdefizit der Schutzschicht auch einen vorgegebenen Wert nicht überschreiten darf. So sind Schichten mit höherem Sauerstoffdefizit nicht geeignet. Bei Verwendung solcher Schichten kommt es wieder zu einer stärkeren Veränderung der optischen Daten der zu schützenden Metallschicht, insbesondere treten nach der Temperaturbehandlung Fleckenbildung und Trübungserscheinungen auf. Es ist zu vermuten, daß in diesem besonders stark unterstöchiometrischen Bereich die Schutzschicht ungleichmäßig oxidiert wird, so daß es zur Ausbildung von zusätzlichen Korngrenzen mit erhöter Sauerstoff-Diffusion oder zur Rißbildung in der Beschichtung kommt. Aber auch hier sind wegen der Komplexität der Prozesse nur Vermutungen möglich.

Als Materialien für die Metallschicht sind die Elemente mit den Ordnungszahlen 22 - 28 des Periodischen Systems, insbesondere die Metalle Chrom, Eisen, Nickel, Titan und Vanadium, sowie Legierungen dieser Metalle, aber auch Zusammensetzungen mit einem überwiegenden Gehalt an einem der vorgenannten Metalle oder Metallegierungen geeignet. Bewährt haben sich z. B. Chrom-Eisen-Aluminium-Legierungen.

Als Schutzschichten haben sich Schichten aus oder mit einem überwiegenden Anteil an wenigstens einem Metalloxid oder Metallmischoxid aus der Gruppe Sn, In, Ta als geeignet erwiesen. Wie bereits ausgeführt, müssen diese Oxid- bzw. Mischoxidschichten in Abweichung von der stöchiometrischen Zusammensetzung der Oxide ein bestimmtes Sauerstoff-Defizit aufweisen. Dieses Defizit ist, jeweils bezogen auf ein Metallatom der entsprechenden Oxide, annähernd gleich. Die erforderliche Zusammensetzung entspricht den Beziehungen $InO_{1,5-x}$, $SnO_{2-x}$, $TaO_{2,5-x}$, wobei x im Bereich 0,05 $\leq x \leq 0,4$ liegt.

Es hat sich gezeigt, daß die Dicke der Oxidschicht mit Sauerstoffdefizit einen Mindestwert nicht unterschreiten darf, damit in Verbindung mit dem Temperatur-Zyklus des Vorspann- bzw. Biegeprozesses eine ausreichende Schutzwirkung vorhanden ist. Diese Mindestdicke liegt bei etwa 10 nm, vorzugsweise bei 13 nm.

Dickere Schichten können ebenfalls verwendet werden. Das ist z. B. dann der Fall, wenn über deren Interferenzwirkung auf die Metallschicht zusätzliche optische Wirkungen, wie z. B. eine Entspiegelungswirkung oder eine Farbwirkung, erzielt werden sollen. Die dafür benötigten Oxidschichten liegen dabei im allgemeinen im Bereich von etwa 20 nm bis 70 nm.

Bei dem vorhandenen Sauerstoffdefizit der Schutzschichten weisen diese im allgemeinen noch eine Härte und Abriebfestigkeit auf, wie sie für die weitere Manipulation des beschichteten Glasträgers vor dem Vorspannen bzw. Biegen benötigt wird. Allerdings liegen diese Werte etwas unter denen, welche mit Oxidschichten stöchiometrischer Zusammensetzung erreicht werden.

Zur weiteren Verbesserung der Schichthärte und Abriebfestigkeit hat sich ein Verfahren bewährt, bei dem zuerst die Schutzschicht mit Sauerstoff-Defizit in der erforderlichen Mindestdicke und darüber eine weitere Oxidschicht aufgebracht wird. Die zweite Oxidschicht kann eine Oxidschicht stöchiometrischer Zusammensetzung des gleichen Metalls, wie es bei der Schutzschicht verwendet wird, sein. Es kann jedoch auch eine Oxidschicht eines anderen Metalls aufgebracht werden. Dieses Verfahren des Aufbringens einer Doppelschicht ist besonders vorteilhaft, wenn wegen erwünschter optischer Wirkungen die benötigte Schichtdicke über dem Mindestwert für die Schutzwirkung liegt, da dann dieser Gesichtspunkt mit einer noch verbesserten Schichthärte kombiniert werden kann. Innerhalb des Erfindungsgedankens ist es im übrigen natürlich durchaus möglich, zwischen dem Glasträger und der Metallschicht weitere Schichten, beispielsweise auch Silber- oder Palladiumschichten oder dergleichen, anzuordnen, je nach den gewünschten spektralen bzw. allgemein optischen Eigenschaften, solange nur in der erfindungswesentlichen Weise die Metallschicht an ihrer dem Glasträger abgewandten Seite durch eine unterstöchiometrisch aufgebrachte Schutzschicht der erfindungsgemäßen Zusammensetzung und Dicke gegen das Herandiffundieren von Sauerstoff bei den für die Biege- und/oder Vorspannprozesse erforderlichen Zeiten und Temperaturen geschützt wird.

Die Herstellung der erfindungsgemäßen Beschichtung erfolgt in aller Regel durch Vakuum-Beschichtung. Die Schichten können dabei durch Verdampfen aus widerstandsgeheizten Verdampfervorrichtungen oder aber auch durch Elektronenstrahlverdampfung aufgebracht werden. Ferner eignen sich Kathodenzerstäubung als Gleichstrom- oder Niederfrequenzzerstäubung, insbesondere aber auch Hochfrequenz- und MAGNETRON-Zerstäubung. Die Metall- bzw. Metallegierungsschichten können dabei entweder durch direktes Verdampfen oder Zerstäubung in neutraler Atmosphäre hergestellt werden. Für die Herstellung der Oxidschichten eignet sich das Verfahren der reaktiven Verdampfung, insbesondere auch das Verfahren der reaktiven Zerstäubung. Besonders wirtschaftlich ist dabei das Verfahren der reaktiven MAGNETRON-Zerstäubung, bei welchem entsprechende Metall- bzw. Metallegierungstargets in einer Atmosphäre, welche u.a. Sauerstoff enthält, zerstäubt werden. Bei diesem Verfahren läßt sich das erforderliche Sauerstoff-Defizit der Schicht gut definiert einstellen.

Unter einer Metallschicht mit einem überwiegenden Gehalt an einem Metall oder einer Metallegierung aus den Elementen mit Ordnungszahlen 22 bis 28 des Periodischen Systems wird im Zusammenhang mit der Erfindung im übrigen eine solche Metallschicht verstanden, deren Eigenschaften im wesentlichen durch die genannten Elemente bestimmt sind. In aller Regel ist dies bei Schichten der Fall, bei denen der Gehalt an einem oder mehreren dieser Elemente insgesamt wenigstens 50 Atomprozent beträgt. Entsprechendes gilt für die erfindungsgemäßen Schutzschichten mit einem überwiegenden Gehalt an wenigstens einem Metalloxid oder Metallmischoxid aus der Gruppe Sn, In, Ta, wobei auch bei diesen Metalloxidschutzschichten die Schichteigenschaften durch diejenigen der genannten Metalloxide bestimmt sein sollen. In aller Regel ist dies bei solchen Schichten der Fall, bei denen der Gehalt an In, Sn und/oder Ta, bezogen auf den Gesamtmetallgehalt der Oxidschicht, insgesamt wenigstens 50 Atomprozent beträgt.

Weitere Merkmale und Vorteile der Erfindung ergeben sich aus der nachstehenden Beschreibung, in der Ausführungsbeispiele anhand der schematischen Zeichnung im einzelnen erläutert sind. Dabei zeigt:

Fig. 1 ein erstes Ausführungsbeispiel einer nach dem erfindungsgemäßen Verfahren herstellbaren Glasscheibe im Schnitt senkrecht zur Scheibenebene;

Fig. 2 ein weiteres Ausführungsbeispiel einer nach dem erfindungsgemäßen Verfahren herstellbaren Glasscheibe, ebenfalls im Schnitt senkrecht zur Scheibenebene;

Fig. 3 die spektrale Transmission vor und nach Durchführung des Vorspannprozesses für die nach Beispiel I hergestellte Glasscheibe;

Fig. 4 die spektrale Transmission vor und nach Durchführung des Vorspannprozesses für Beispiel II;

Fig. 5 die spektrale Transmission der nach Beispiel III hergestellten Glasscheibe vor und nach dem Vorspannprozeß; und

Fig. 6 die entsprechenden Ergebnisse der Spektralmessungen beim Vorgehen gemäß Beispiel IV.

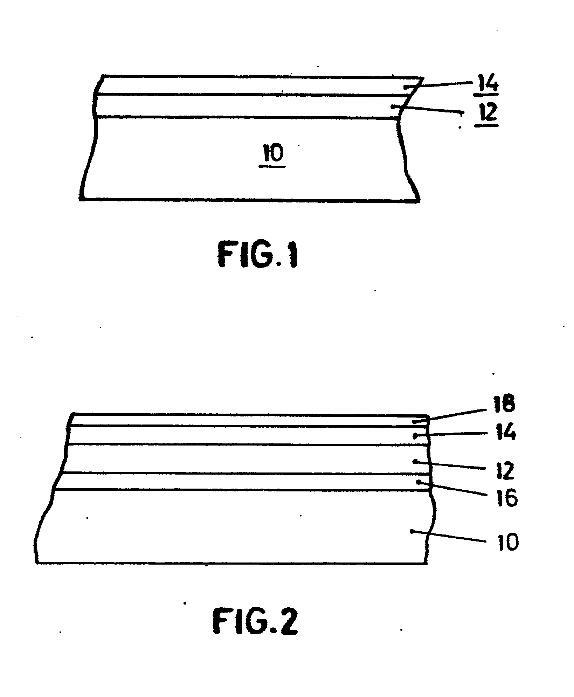

Bei dem in Fig. 1 gezeigten Ausführungsbeispiel ist auf einen Glasträger 10 eine Metallschicht 12 aus Nickel mit einer Dicke von 10 nm aufgebracht, an die eine Schutzschicht 14 mit einer Dicke von 20 nm anschließt, die vor dem Vorspannprozeß die Zusammensetzung $SnO_{1,7}$ hat.

Beim Ausführungsbeispiel von Fig. 2 trägt der Glasträger 10 aufeinanderfolgend eine Unterschicht 16 aus $In_2O_3$ mit einer Dicke von 6 nm, die als haftverbessernde Schicht wirkt, eine Metallschicht 12 aus Kobalt mit einer Dicke von 22 nm, eine Schutzschicht 14, die vor dem Vorspannprozeß die Zusammensetzung $SnO_{1,7}$ hat, mit einer Dicke von 16 nm sowie eine Deckschicht 18 aus $SnO_2$ mit einer Dicke von 20 nm.

Scheiben der in Fig. 1 und 2 wiedergegebenen Art sind bei entsprechender Vorgehensweise nach den nachstehend beschriebenen Beispielen herstellbar:

Beispiel I

In einer Vakuum-Beschichtungsanlage, welche mit Beschichtungseinrichtungen für MAGNETRON-Kathodenzerstäubung ausgerüstet war, wurden auf eine Floatglasscheibe im Format 10 cm x 10 cm nacheinander folgende Schichten aufgebracht: Zunächst eine Nickelschicht in einer Dicke von 8,5 nm durch Zerstäubung von einem Nickeltarget in Argon-Atmosphäre bei einem Druck von $5 \cdot 10^{-3}$ mbar. Anschließend wurde auf die Nickelschicht eine Zinnoxidschicht durch reaktive Zerstäubung eines Zinntargets in einer Argon-Sauerstoff-Atmosphäre mit 40 % Sauerstoffanteil bei einem Druck von $4 \cdot 10^{-3}$ mbar aufgebracht. Die Beschichtungsparameter der reaktiven Zerstäubung waren dabei so gewählt, daß die Schicht die Zusammensetzung $SnO_{1,83}$ aufwies. Die Zusammensetzung wurde dabei nach Herstellung der Gesamtbeschichtung über eine Auger-Elektronenanalyse bestimmt. Die Dicke der Schicht betrug 28 nm.

Die beschichtete Scheibe wies in der Durchsicht und bei Betrachtung von der Glasseite ein neutrales Aussehen auf. Die beschichtete Scheibe wurde anschließend in einem Vorspann-Ofen auf 600°C aufgeheizt und abgeschreckt. Durch den Vorspannprozeß veränderte sich das Aussehen der Scheibe praktisch nicht.

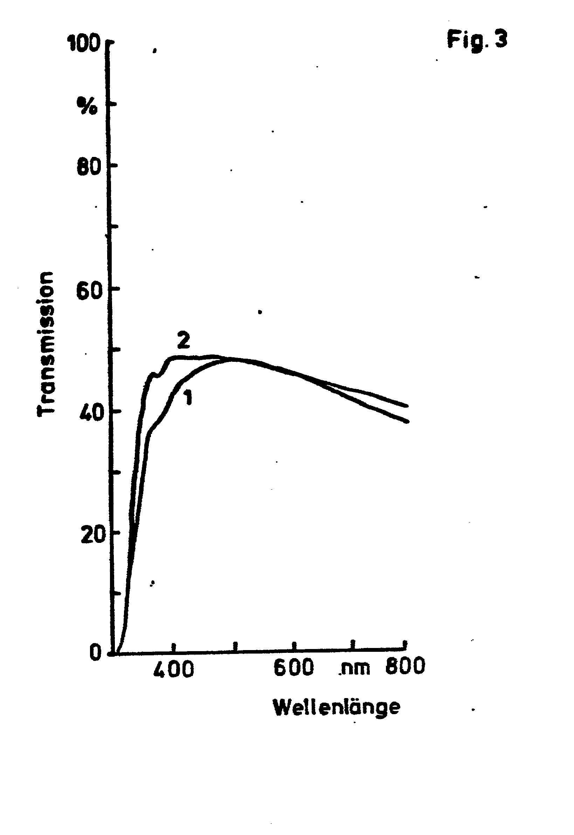

In Fig. 3 ist als Kurve 1 und Kurve 2 die spektrale Transmission vor und nach Durchführung des Vorspannprozesses für das Wellenlängengebiet von 300 bis 800 nm wiedergegeben. Wie aus Fig. 3 ersichtlich, ist die Änderung der Transmission, insbesondere im sichtbaren Spektralgebiet, geringfügig. Diese minimalen Änderungen sind wahrscheinlich durch die weitere Oxidation der äußeren Schutzschicht beim Vorspannprozeß und die damit verbundene Abnahme der beim Sauerstoffdefizit vorhandenen Restabsorption hervorgerufen. Hinzu kommen noch Tempereffekte durch diese Temperaturbehandlung, wie sie bei Vakuum-Schichten generell auftreten.

Beispiel II

Es wurde wie in Beispiel I verfahren, mit dem Unterschied, daß die Zinnoxidschicht durch entsprechende Wahl der Beschichtungsparameter ohne meßbares Sauerstoffdefizit, d. h. entsprechend der stöchiometrischen Zusammensetzung des $SnO_2$, aufgebracht wurde.

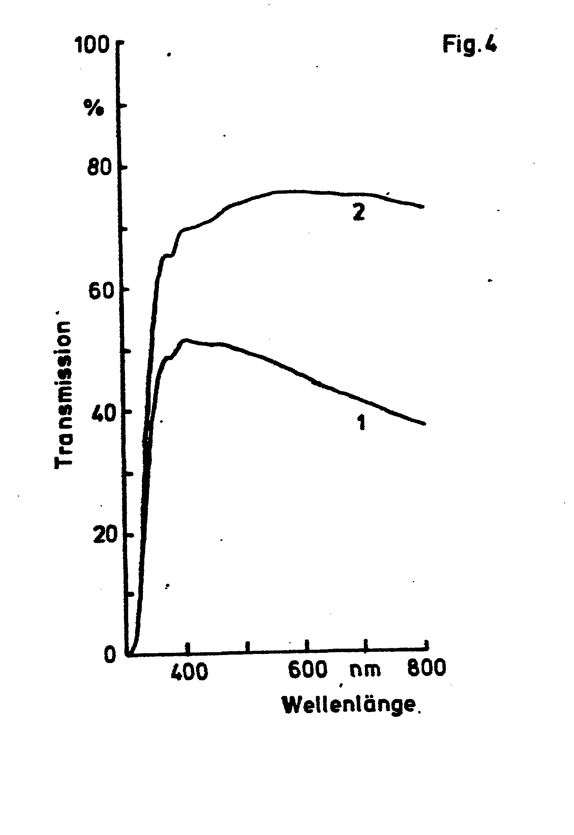

Die Ergebnisse der Spektralmessungen vor und nach Durchführung des Vorspannprozesses bei 600°C sind als Kurve 1 und 2 in Fig. 4 wiedergegeben. Sie zeigen, daß sich durch den Vorspannprozeß die Transmission erheblich erhöht, d. h. eine nennenswerte Lichtdämpfung und Sonnenschutzwirkung sind nicht mehr vorhanden.

Beispiel III

Es wurde wie in Beispiel I verfahren, mit dem Unterschied, daß die Beschichtungsparameter bei der Herstellung der Zinnoxidschicht so eingestellt waren, daß sich eine suboxidische Schicht der Zusammensetzung SnO ergab.

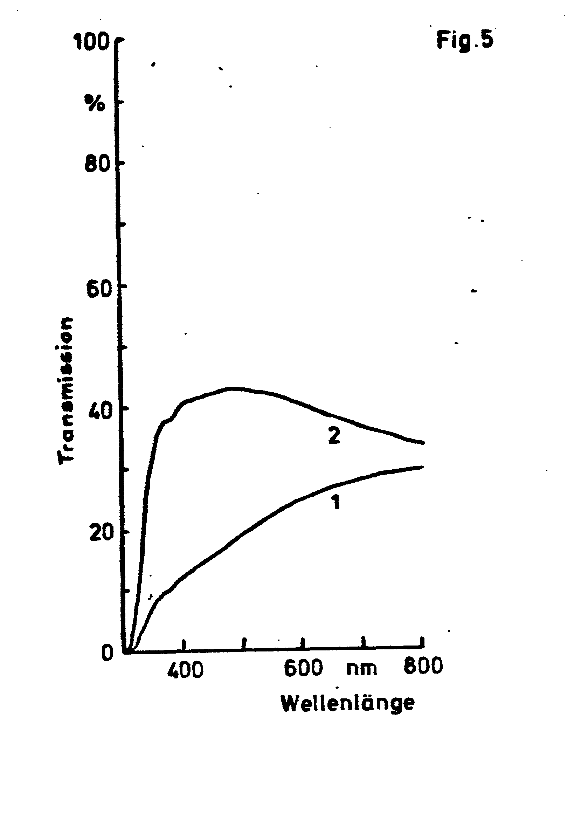

Die spektrale Transmission der beschichteten Scheibe vor dem Vorspannprozeß ist als Kurve 1 in Fig. 5 wiedergegeben. Bedingt durch das hohe Absorptionsvermögen der SnO-Schicht ergeben sich wesentlich niedrigere Transmissionswerte als in Beispiel I und II. Nach Durchführung des Vorspannprozesses (Kurve 2) tritt eine erhebliche Transmissionserhöhung auf. Darüber hinaus weist die Beschichtung ein fleckiges Aussehen auf und ist damit für die genannten Anwendungen nicht geeignet.

Beispiel IV

In der Beschichtungsanlage gamäß Beispiel I wurden auf eine Floatglasscheibe von 10 cm x 10 cm nacheinander folgende Schichten aufgebracht:
- eine $SnO_2$-Schicht von 20 nm Dicke durch reaktive Zerstäubung von einem Zinntarget bei einem Druck von $4 \cdot 10^{-3}$ mbar in einer Argon-Sauerstoffatmosphäre der Zusammensetzung 50 % $O_2$, 50 % Ar;
- eine Nickelschicht der Dicke 2 nm durch Zerstäubung von einem Nickeltarget in Argon-Atmosphäre bei einem Druck von $4 \cdot 10^{-3}$ mbar;
- eine Silberschicht von 8 nm Dicke durch Zerstäubung von einem Silbertarget in Argon-Atmosphäre bei einem Druck von $3 \cdot 10^{-3}$ mbar;
- eine Nickelschicht von 3 nm Dicke durch Zerstäubung von einem Nickeltarget in Argon-Atmosphäre bei einem Druck von $4 \cdot 10^{-3}$ mbar;
- eine Zinnoxidschicht der Zusammensetzung $SnO_{1,70}$ mit einer Dicke von 30 nm durch reaktive Zerstäubung von einem Zinntarget bei einem Druck von $4 \cdot 10^{-3}$ mbar in einer Argon-Sauerstoffatmosphäre der Zusammensetzung 35 % $O_2$, 65 % Ar.

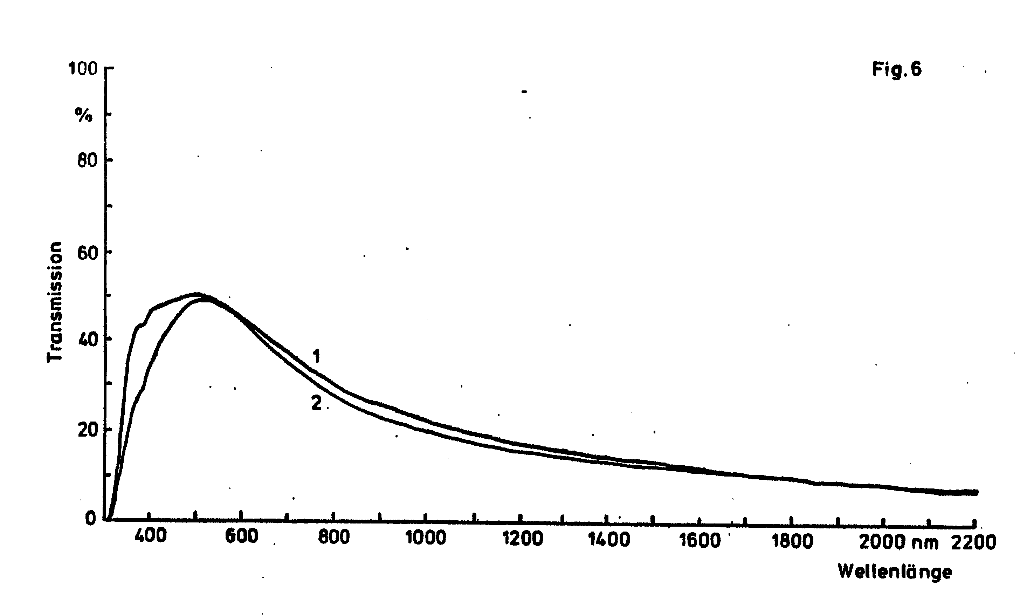

Die beschichtete Scheibe wies in der Durchsicht einen leicht umbralen Farbstich auf, bei Betrachtung von der Glasseite war die Scheibe praktisch neutral. Die durchgeführten Spektralmessungen (Kurve 1, Fig. 6) zeigen, daß die Scheibe im sichtbaren Gebiet eine hohe Lichtdurchlässigkeit in Verbindung mit niedriger Transmission im nahen Infraroten aufweist, d. h. die Sonnenschutzwirkung ist sehr gut.

Nach Durchführung des Vorspannprozesses ergab sich die als Kurve 2 wiedergegebene Transmissionskurve. Sie zeigt, daß die optischen Daten für den Gesamtstrahlungsbereich der Sonne im wesentlichen erhalten bleiben. Lediglich im kurzwelligen sichtbaren Spektralbereich ist die Transmission etwas höher als zuvor. Diese Transmissionserhöhung, die vermutlich durch die Nachoxidation der $SnO_{1,70}$-Schicht hervorgerufen wird, reduziert den ursprünglich vorhandenen leichten Farbstich und verbessert damit die Durchsicht.

**Patentansprüche**

1. Verfahren zum Herstellen einer vorgespannten und/oder gebogenen Glasscheibe aus Natron-Kalk-Silikatglas mit reduzierter Transmission in (einem) vorgebbaren Spektralbereich(en), insbesondere Sonnenschutzscheibe, bei dem auf wenigstens eine Seite eines Glasträgers mindestens eine Metallschicht mit einem überwiegenden Gehalt an einem Metall oder einer Metallegierung aus den Elementen mit den Ordnungszahlen 22 bis 28 des Periodischen Systems und auf deren dem Glasträger abgewandte Seite eine Schutzschicht aus wenigstens einem Metalloxid oder Metallmischoxid aufgebracht werden und ein thermischer Vorspann- und/oder Biegeprozeß in Luft bei einer Temperatur von 580°C bis 680°C, vorzugsweise 600°C bis 650°C, durchgeführt wird, dadurch gekennzeichnet, daß sowohl die Metallschicht als auch die Schutzschicht vor dem thermischen Vorspann- und/ oder Biegeprozeß auf den im wesentlichen planen Glasträger aufgebracht werden; und daß die Schutzschicht mit einem Sauerstoffdefizit x, bezogen auf ein Metallatom des Metalloxids bzw. der Metalloxide, von $0,05 \leq x \leq 0,4$ und in einer Dicke von 10 nm bis 10 nm in einer derartigen Zusammensetzung aufgebracht wird, daß beim Vorspann- und/oder Biegeprozeß keine nennenswerte Sauerstoffdiffusion bis zu der Metallschicht stattfindet.

2. Verfahren nach Anspruch 1, dadurch gekennzeichnet, daß als Schutzschicht eine Schicht aus oder mit einem überwiegenden Gehalt an wenigstens einem Metalloxid oder Metallmischoxid aus der Gruppe Sn, In, Ta aufgebracht wird.

3. Verfahren nach Anspruch 1 oder 2, dadurch gekennzeichnet, daß das Sauerstoffdefizit im Bereich $0,1 \le x \le 0,3$ liegt.

4. Verfahren nach einem der vorangehenden Ansprüche, dadurch gekennzeichnet, daß als Schutzschicht eine Indiumoxidschicht mit der Zusammensetzung $InO_{1,5-x}$ aufgebracht wird.

5. Verfahren nach einem der Ansprüche 1 bis 3, dadurch gekennzeichnet, daß als Schutzschicht eine Zinnoxidschicht mit der Zusammensetzung $SnO_{2-x}$ aufgebracht wird.

6. Verfahren nach einem der Ansprüche 1 bis 3, dadurch gekennzeichnet, daß als Schutzschicht eine Tantaloxidschicht mit der Zusammensetzung $TaO_{2,5-x}$ aufgebracht wird.

7. Verfahren nach einem der vorangehenden Ansprüche, dadurch gekennzeichnet, daß die Dicke der Schutzschicht mindestens 13 nm beträgt.

8. Verfahren nach Anspruch 7, dadurch gekennzeichnet, daß die Dicke der Schutzschicht ca. 20 nm bis 70 nm beträgt.

9. Verfahren nach einem der vorangehenden Ansprüche, dadurch gekennzeichnet, daß auf die Schutzschicht eine Deckschicht aus mindestens einem Metalloxid im wesentlichen stöchiometrischer Zusammensetzung aufgebracht wird.

10. Verfahren nach Anspruch 9, dadurch gekennzeichnet, daß die Deckschicht mindestens ein Metalloxid aus derjenigen Gruppe aufweist, aus der das Metalloxid bzw. die Metalloxide für die Schutzschicht ausgewählt ist bzw. sind.

11. Verfahren nach Anspruch 10, dadurch gekennzeichnet, daß die metallische Zusammensetzung der Deckschicht derjenigen der Schutzschicht entspricht.

12. Verfahren nach einem der vorangehenden Ansprüche, dadurch gekennzeichnet, daß auf den Glasträger vor dem Aufbringen der Metallschicht(en) mindestens eine Unterschicht aus einem Metall, einer Metallegierung, einem Metalloxid oder einem Metallmischoxid aufgebracht wird.

## Claims

1. A process for the preparation of a tempered and/or curved glass pane of soda lime silicate glass having reduced transmission in one or more predeterminable spectral ranges, more particularly a tinted pane, in which at least one metal layer having a predominant content of a metal or a metal alloy of elements 22 to 28 of the Periodic System is applied to at least one side of a glass support and a protective layer of at least one metal oxide or metal mixed oxide is applied to the side remote from the glass support and thermal tempering and/or bending treatment is given in air at a temperature of from 580 to 680°C, preferably 600 to 650°C, characterised in that both the metal layer and also the protective layer are applied to the substantially flat glass support before the thermal tempering and/or bending tratement and the protective layer is applied with an oxygen deficit $x$, referred to a metal atom of the or each metal oxide, of $0.05 \le x \le 0.4$ and in a thickness of from 10 to 100 nm in a composition such that there is no appreciable oxygen diffusion as far as the metal layer during the tempering and/or bending treatment.

2. A process according to claim 1, characterised in that a layer consisting wholly or predominantly of at least one metal oxide or metal mixed oxide of the group Sn, In and Ta is applied a protective layer.

3. A process according to claim 1 or 2, characterised in that the oxygen deficit is in the range of from $0.1 \le x \le 0.3$.

4. A process according to any of the previous claims, characterised in that an indium oxide layer having the compositon $InO_{1.5-x}$ is applied as protective layer.

5. A process according to any of claims 1–3, characterised in that a tin oxide layer having the composition $SnO_{2-x}$ is applied as protective layer.

6. A process according to any of claims 1–3, characterised in that a tantalum oxide layer having the composition $TaO_{2.5-x}$ is applied as protective layer.

7. A process according to any of the previous claims, characterised in that the thickness of the protective layer is at least 13 nm.

8. A process according to claim 7, characterised in that the thickness of the protective layer is approximately from 20 to 70 nm.

9. A process according to any of the previous claims, characterised in that a covering layer of at least one metal oxide of substantially stoichiometric composition is applied to the protective layer.

10. A process according to claim 9, characterised in that the covering layer contains at least one metal oxide of the group from which the or each metal oxide for the protective layer has been selected.

11. A process according to claim 10, characterised in that the metal composition of the covering layer corresponds to that of the protective layer.

12. A process according to any of the previous claims, characterised in that at least one substrate of a metal, metal alloy, metal oxide or metal mixed oxide is applied to the glass support before the application of the or each metal layer.

## Revendications

1. Procédé de fabrication d'une vitre trempée et/ou bombée, en verre de silice calcaire natron avec une transmission réduite dans un (ou des) domaine(s) spectral(aux) prédéfini(s), notamment d'une vitre de protection solaire, selon lequel on applique, au moins sur un côté d'un substrat de verre, au moins une couche métallique avec une teneur prépondérante d'un métal ou d'un alliage métallique d'éléments de la classification périodique présentant un numéro compris entre 22 et 28, et sur le côté de cette couche opposé à celui qui est adjacent au substrat de verre, une couche de protection composée d'au moins un oxyde métallique ou d'un mélange d'oxyde métalliques, et selon lequel on effectue, à l'air, une opération thermique de trempe et/ou de courbure à une température de 580°C à 680°C, de préférence 600°C à 650°C, procédé caractérisé en ce que, aussi bien la couche métallique que la couche de protection, sont appliquées sur le substrat de verre sensiblement plan, avant l'opération thermique de trempe et/ou de courbure, et en ce que la couche de protection est appliquée, avec un déficit en oxygène x, rapporté à un atome métallique de l'oxyde métallique ou des oxydes métalliques, supérieur ou égal à 0,05 et inférieur ou égal à 0,4, avec une épaisseur de 10 nm à 100 nm, et avec une composition telle, que lors de l'opération de trempe et/ou de courbure, n'ait lieu aucune diffusion notable d'oxygène jusqu'à la couche métallique.

2. Procédé selon la revendication 1, caractérisé en ce que en guise de couche de protection, on applique une couche d'au moins un oxyde métallique ou mélange d'oxydes métalliques du groupe Sn, In, Ta, ou avec une teneur prépondérante de ces oxydes.

3. Procédé selon la revendication 1 ou 2, caractérisé en ce que le déficit en oxygène se situe dans la plage $0,1 \leq x \leq 0,3$.

4. Procédé selon l'une des revendications précédentes, caractérisé en ce que l'on applique en guise de couche de protection, une couche d'oxyde d'indium de composition $InO_{1,5-x}$.

5. Procédé selon l'une des revendications 1 à 3, caractérisé en ce que l'on applique en guise de couche de protection, une couche d'oxyde d'étain de composition $SnO_{2-x}$.

6. Procédé selon l'une des revendications 1 à 3, caractérisé en ce que l'on applique en guise de couche de protection, une couche d'oxyde de tantale de composition $TaO_{2,5-x}$.

7. Procédé selon l'une des revendications précédentes, caractérisé en ce que l'épaisseur de la couche de protection est au moins égal à 13 nm.

8. Procédé selon la revendication 7, caractérisé en ce que la couche de protection présente une épaisseur environ de 20 nm à 70 nm.

9. Procédé selon l'une des revendications précédentes, caractérisé en ce que l'on applique sur la couche de protection, une couche de revêtement d'au moins un oxyde métallique avec une composition sensiblement stoechiométrique.

10. Procédé selon la revendication 9, caractérisé en ce que la couche de revêtement présente au moins un oxyde métallique du groupe duquel est ou sont choisis le ou les oxydes métalliques pour la couche de protection.

11. Procédé selon la revendication 10, caractérisé en ce que la composition métallique de la couche de revêtement correspond à celle de la couche de protection.

12. Procédé selon l'une des revendications précédentes, caractérisé en ce que l'on applique sur la substrat de verre, avant l'application de la (ou des) couche(s) métallique(s), au moins une sous-couche en un métal, un alliage métallique, un oxyde métallique ou un mélange d'oxydes métalliques.

14
12

10

FIG.1

18
14
12
16

10

FIG.2

Fig. 3

EP 0 224 704 B1

Fig. 4

Fig.5

Fig. 6

EP 0 224 704 B1